# FASCICULE DE BREVET EUROPEEN

(11) **EP 3 014 849 B1**
(45) Date de publication et mention de la délivrance du brevet: **01.08.2018**
(21) Numéro de dépôt: 14749903.2
(22) Date de dépôt: 27.06.2014
(51) Int. Cl.: H04L 29/06, H04W 12/04

(54) **PROCÉDÉ DE CHANGEMENT DE CLÉ D'AUTHENTIFICATION**
VERFAHREN ZUM TAUSCHEN EINES AUTHENTIFIZIERUNGSSCHLÜSSELS
METHOD FOR CHANGING AN AUTHENTICATION KEY

(30) Priorité: 28.06.2013 FR 1356264
(43) Date de publication de la demande: 04.05.2016
(73) Titulaire: Orange, 75015 Paris (FR)
(72) Inventeur: GRIMAULT, Jean-Luc, F-14120 Mondeville (FR); GHAROUT, Saïd, F-75019 Paris (FR)
(86) Numéro de dépôt international: PCT/FR2014/051645
(87) Numéro de publication internationale: WO 2014/207404

(56) Documents cités:
- WO-A1-2006/085207
- WO-A1-2009/020281
- WO-A2-2006/126077
- US-A1- 2005 251 680

## Description

L'invention se rapporte au domaine général des télécommunications.

Elle concerne plus particulièrement un procédé de génération d'une clé d'authentification par un module de sécurité d'un équipement mobile, la clé d'authentification étant destinée à être utilisée lors d'une authentification entre le module de sécurité et le réseau afin d'accéder au réseau.

L'invention s'applique dans le cadre de mises à jour à distance de données protégées, telles que des clés secrètes, mémorisées dans un module de sécurité d'un équipement mobile. Une telle mise à jour est requise lors d'un changement d'opérateur de réseau à distance. L'invention trouve une application particulièrement intéressante dans des domaines tels que ceux de la téléphonie mobile, ou de la communication de machine à machine (le terme habituellement utilisé est le terme « M2M », de l'anglais « Machine To Machine »). Dans ces domaines, des équipements mobiles, comme un téléphone mobile ou une machine équipée de capteurs, embarquent un module de sécurité (le terme habituellement utilisé est le terme anglais « Secure Element »), de type « UICC » (de l'anglais « Universal Integrated Circuit Card »), ou « eUICC » (pour « embedded », ou embarquée). Un exemple de tel module de sécurité est une carte « (U)SIM » (pour « (Universal) Suscriber Identity Module ») insérée dans un équipement et utilisée en téléphonie mobile. Cette carte (U)SIM est préconfigurée pour fonctionner avec un premier opérateur de réseau. A cette fin, des clés propres à un gestionnaire du module, par exemple le premier opérateur de réseau dans le cas d'une carte (U)SIM, et au module de sécurité sont préinstallées sur le module de sécurité avant sa mise en service. Ainsi, une fois le module de sécurité mis en circulation, le premier opérateur de réseau contrôle la carte, et est le seul à pouvoir installer des applications sur la carte, faire des mises à jour, authentifier le module de sécurité, etc.

Lorsqu'un abonné du premier opérateur souhaite changer d'opérateur, il est nécessaire de remplacer dans l'équipement le module de sécurité configuré pour le premier opérateur par un deuxième module de sécurité configuré pour le deuxième opérateur, c'est-à-dire qui comprend des clés propres au deuxième opérateur. On comprend que dans le cas d'équipements M2M interconnectés qui utilisent le réseau du premier opérateur pour communiquer avec un serveur central à distance, un changement d'opérateur nécessite de changer les modules de sécurité de tous ces équipements, ce qui nécessite donc le déplacement d'un technicien sur site pour effectuer ce changement. Cela est d'autant plus contraignant qu'il n'est pas rare que les équipements soient difficiles d'accès. Par ailleurs, lorsque les modules de sécurité ne sont pas amovibles, mais soudés à l'équipement, un tel changement nécessite le remplacement de l'équipement.

Des solutions existent pour modifier des clés d'authentification d'opérateurs sur une carte (U)SIM sans changer le module de sécurité. Par exemple, la demande de brevet internationale du demandeur publiée sous le numéro WO2011001076 décrit un procédé de changement d'une première clé d'authentification et d'un premier numéro d'identification d'abonné sur une carte (U)SIM, propres à un premier opérateur de réseau opérant un premier réseau, par une deuxième clé d'authentification et un deuxième numéro d'identification d'abonné, propres à un deuxième opérateur de réseau opérant un deuxième réseau. A cette fin, une clé maîtresse de génération de clés propre au deuxième réseau est mémorisée dans la carte lors d'une phase de pré-configuration réalisée avant la mise en service de la carte. Ainsi, lorsque la carte est mise en circulation pour fonctionner dans le premier réseau et qu'une demande de changement vers le deuxième opérateur est reçue, le deuxième opérateur transmet au premier opérateur un deuxième numéro d'identification d'abonné dans le deuxième réseau. Le premier opérateur transmet à la carte (U)SIM, à travers son réseau un aléa et le deuxième numéro d'identification d'abonné reçu, et envoie également l'aléa au deuxième opérateur de réseau. La carte génère ensuite une deuxième clé d'authentification en appliquant un algorithme de diversification de clés à l'aléa et à la clé maîtresse mémorisée dans la carte et propre au deuxième réseau. De son côté, le deuxième opérateur calcule la même clé d'authentification avec la même clé maîtresse qui lui est propre et l'aléa reçu du premier réseau. Le deuxième opérateur mémorise dans sa base d'abonnés, la deuxième clé d'authentification en association avec le deuxième numéro d'identification d'abonné. Au terme du procédé, la première clé d'authentification est remplacée dans la carte par la deuxième clé d'authentification et le premier numéro d'identification d'abonné est remplacé dans la carte par le deuxième numéro d'identification d'abonné. Ainsi, la carte (U)SIM est prête à fonctionner dans le deuxième réseau.

Ainsi, il est possible de transmettre le contrôle d'un élément de sécurité d'un premier opérateur à un deuxième opérateur, une fois que l'élément de sécurité a été mis en circulation. Ce transfert peut être opéré sans que l'abonné ne change de module de sécurité ou n'intervienne manuellement sur ce module.

Cependant, cela nécessite de mémoriser les clés maîtresses propres à tous les opérateurs vers lesquels on est susceptible d'opérer un transfert du contrôle de la carte. Par ailleurs il y a des risques qu'on ne puisse pas transférer le contrôle de cartes vers un nouvel opérateur lorsque les cartes ont été préconfigurées préalablement à l'arrivée de cet opérateur.

La publication brevet US2005/251680 décrit une technique de génération de clés et leur utilisation dans un réseau mobile pour un équipement comprenant un module de sécurité.

Un des buts de l'invention est de remédier à des insuffisances/inconvénients de l'état de la technique et/ou d'y apporter des améliorations.

A cette fin, l'invention propose un procédé de génération dans un module de sécurité d'une clé d'authentification d'accès à un réseau mobile, le module de sécurité mémorisant une première clé maîtresse partagée avec une première entité réseau et une première clé d'authentification adaptée pour accéder à un réseau de la première entité réseau, le procédé comprenant les étapes suivantes, mises en oeuvre par le module de sécurité :
- une étape d'envoi à une deuxième entité réseau d'une requête de transfert,
- une première étape de réception en provenance de la deuxième entité d'un premier secret chiffré pour le module de sécurité,
- une étape de génération d'une clé secrète de génération à partir de la première clé maîtresse et du premier secret,
- une étape de réception en provenance de la deuxième entité d'un deuxième secret chiffré pour le module de sécurité et d'un message d'authentification du deuxième secret calculé par la deuxième entité au moyen de la clé secrète de génération transmise à la deuxième entité par la première entité,
- une étape de vérification du message d'authentification au moyen de la clé secrète de génération,
- une étape de génération d'une deuxième clé maîtresse si la vérification est positive, ladite deuxième clé maîtresse étant générée à partir du deuxième secret et de la clé secrète de génération, et utilisée pour générer une deuxième clé d'authentification pour accéder à un réseau de la deuxième entité réseau.

Le procédé décrit permet de générer dans un module de sécurité une clé destinée à être utilisée comme clé d'authentification lors de l'accès au réseau de la deuxième entité par un équipement mobile qui comprend le module de sécurité. Cette clé est donc destinée à être partagée avec la deuxième entité. La génération de la clé se fait à distance, sans intervention manuelle sur le module de sécurité, en particulier sans changement du module de sécurité compris dans l'équipement mobile.

Par ailleurs, cette génération ne nécessite pas une installation préalable dans le module de sécurité d'une clé maîtresse de la deuxième entité puisque cette deuxième clé maîtresse est générée d'une part par le module de sécurité à partir du deuxième secret reçu de manière sécurisée de la deuxième entité et de la clé secrète de génération, et d'autre part par la deuxième entité réseau. La clé secrète de génération est générée d'une part par le module de sécurité et d'autre part par la première entité réseau, qui contrôlait initialement le module de sécurité. Cette génération se fait à partir de la première clé maîtresse connue à la fois de la première entité et du module de sécurité, et à partir d'un premier secret transmis de la première entité au module de sécurité. La clé secrète de génération est transmise de manière sécurisée de la première à la deuxième entité. Grâce à cette transmission, qui permet à la deuxième entité de générer la deuxième clé maîtresse, la première entité donne son autorisation pour qu'à terme le contrôle du module de sécurité soit transféré de la première entité réseau à la deuxième entité réseau. Ce transfert de contrôle du module de sécurité se matérialise par la génération de la deuxième clé maîtresse, à partir d'un deuxième secret transmis de la deuxième entité au module de sécurité et de la clé secrète de génération, destinée à être utilisée, pour générer la clé d'authentification pour accéder au réseau de la deuxième entité.

Le deuxième secret utilisé par le module de sécurité et la deuxième entité pour générer la deuxième clé maîtresse est généré par la deuxième entité et transmis de façon sécurisée au module de sécurité. Ainsi, la première entité n'a jamais accès à ce deuxième secret, ce qui renforce la sécurité du procédé.

De même, la deuxième clé maîtresse destinée à être utilisée comme clé d'authentification n'est jamais transmise sur le réseau puisque calculée d'une part par la deuxième entité et d'autre part par le module de sécurité. Cela évite d'éventuelles attaques de type man-in-the-middle afin de récupérer cette clé.

Dans un exemple de réalisation, la génération de la deuxième clé d'authentification consiste à appliquer un algorithme de diversification de clés à au moins la deuxième clé maîtresse.

Dans cet exemple de réalisation, la deuxième clé maîtresse est utilisée comme clé de diversification pour générer une deuxième clé d'authentification au moyen d'un algorithme de diversification. Ainsi, la deuxième clé maîtresse peut être utilisée pour la génération de plusieurs clés d'authentification successives. Cela est intéressant lorsque l'utilisateur de l'équipement mobile change régulièrement d'opérateur et revient, après plusieurs changements chez l'opérateur correspondant à la deuxième entité réseau. En effet, dans ce cas, si l'on a pris soin de ne pas effacer la deuxième clé maîtresse, la génération d'une nouvelle deuxième clé d'authentification nécessite l'envoi par la deuxième entité d'un label de diversification, mais ne nécessite ni la transmission du deuxième secret utilisé pour générer la deuxième clé maîtresse, ni la re-génération de la deuxième clé maîtresse. Le procédé de génération est donc simplifié.

Dans un autre exemple de réalisation, l'étape de génération de la clé d'authentification consiste à appliquer la fonction identité à la deuxième clé maîtresse.

Dans un exemple de réalisation, le premier et le deuxième secrets sont reçus par le module de sécurité au cours d'une même étape de réception avec un message d'authentification des deux secrets.

Transmettre le premier et le deuxième secrets dans un même message permet un gain de temps notable.

L'invention concerne aussi un procédé de génération d'une clé d'authentification d'accès à un réseau mobile par une première entité réseau, une clé d'authentification générée étant destinée à être partagée avec un module de sécurité, ledit module mémorisant une première clé maîtresse partagée avec une deuxième entité réseau et une première clé d'authentification adaptée pour accéder à un réseau de la première entité réseau, le procédé comprenant les étapes suivantes, mises en oeuvre par ladite première entité réseau :
- une étape de réception du module de sécurité d'une requête de transfert,
- une étape d'envoi au module de sécurité d'un premier secret chiffré pour le module de sécurité,
- une étape d'envoi du premier secret à la deuxième entité,
- une étape de réception en provenance de la deuxième entité d'une clé secrète de génération générée à partir de la première clé maîtresse et du premier secret,
- une étape d'envoi au module de sécurité d'un deuxième secret chiffré pour le module de sécurité et d'un message d'authentification du deuxième secret calculé au moyen de la clé secrète de génération reçue de la deuxième entité,
- une étape de génération d'une deuxième clé maîtresse à partir de la clé secrète de génération et du deuxième secret, ladite deuxième clé maîtresse étant utilisée pour générer une deuxième clé d'authentification pour accéder à un réseau de la première entité réseau.

Le procédé décrit ici permet à la deuxième entité de générer elle-même la deuxième clé maitresse destinée à être utilisée comme deuxième clé d'authentification, sans transmission de cette clé dans le réseau.

L'invention porte également sur un module de sécurité adapté pour générer une clé d'authentification d'accès à un réseau mobile, le module de sécurité comprenant des moyens pour mémoriser une première clé maîtresse partagée avec une première entité réseau et une première clé d'authentification adaptée pour accéder à un réseau de la première entité réseau, le module de sécurité comprenant en outre :
- des moyens d'envoi, agencés pour envoyer à une deuxième entité réseau une requête de transfert,
- des premiers moyens de réception, agencés pour recevoir un premier secret chiffré en provenance de la deuxième entité,
- des premiers moyens de génération, agencés pour générer une clé secrète de génération à partir de la première clé maîtresse et du premier secret,
- des deuxièmes moyens de réception, agencés pour recevoir en provenance de la deuxième entité un deuxième secret chiffré et un message d'authentification du deuxième secret calculé par la deuxième entité au moyen de la clé secrète de génération transmise à la deuxième entité par la première entité,
- des moyens de vérification, agencés pour vérifier le message d'authentification au moyen de la clé secrète de génération,
- des deuxièmes moyens de génération, agencés pour générer une deuxième clé maîtresse à partir du deuxième secret et de la clé secrète de génération, ladite deuxième clé maîtresse étant destinée à être utilisée pour générer une deuxième clé d'authentification pour accéder à un réseau de la deuxième entité.

L'invention concerne également un programme d'ordinateur destiné à être installé dans une mémoire d'un module de sécurité, comprenant des instructions pour la mise en oeuvre des étapes du procédé de génération d'une clé d'authentification dans un module de sécurité selon l'invention, lorsque le programme est exécuté par un processeur.

L'invention concerne aussi un support de données sur lequel est enregistré le programme ci-dessus.

L'invention porte également sur un équipement mobile comprenant un module de sécurité selon l'invention.

L'invention concerne aussi une entité réseau, adaptée pour générer une clé d'authentification d'accès à un réseau mobile destinée à être partagée avec un module de sécurité, ledit module de sécurité mémorisant une première clé maîtresse partagée avec une première entité du réseau et une première clé d'authentification adaptée pour accéder à un réseau de la première entité réseau, l'entité réseau comprenant :
- des premiers moyens de réception, agencés pour recevoir du module de sécurité une requête de transfert,
- des premiers moyens d'envoi, agencés pour envoyer un premier secret chiffré au module de sécurité,
- des deuxièmes moyens d'envoi, agencés pour envoyer le premier secret à la première entité,
- des deuxièmes moyens de réception, agencés pour recevoir en provenance de la première entité une clé secrète de génération générée à partir de la première clé maîtresse et du premier secret,
- des troisièmes moyens d'envoi, agencés pour envoyer au module de sécurité un deuxième secret chiffré et un message d'authentification du deuxième secret,
- des moyens de génération, agencés pour générer une deuxième clé maîtresse à partir de la clé secrète de génération et du deuxième secret, ladite deuxième clé maîtresse étant destinée à être utilisée pour générer une deuxième clé d'authentification pour accéder à un réseau de la deuxième entité.

L'invention concerne aussi un programme d'ordinateur destiné à être installé dans une mémoire d'une entité réseau, comprenant des instructions pour la mise en oeuvre des étapes du procédé de génération d'une clé d'authentification par une entité réseau selon l'invention, lorsque le programme est exécuté par un processeur.

L'invention porte aussi sur un support de données sur lequel est enregistré le programme ci-dessus.

L'invention concerne également un système de génération d'une clé d'authentification comprenant :
- un module de sécurité tel que décrit précédemment,
- une première entité réseau comprenant :
   - des moyens pour recevoir le premier secret d'une deuxième entité réseau selon l'invention,
   - des moyens de génération, agencés pour générer la clé secrète de génération à partir de la première clé maîtresse et du premier secret,
   - des moyens d'envoi, agencés pour envoyer la clé secrète de génération à la deuxième entité,
- la deuxième entité tel que décrit précédemment.

D'autres caractéristiques et avantages de la présente invention seront mieux compris de la description et des dessins annexés parmi lesquels :
- la figure 1 présente les étapes d'un procédé de changement de clé d'authentification réseau, selon un premier exemple de réalisation ;
- la figure 2 présente les étapes d'un procédé de changement de clé d'authentification réseau, selon un deuxième exemple de réalisation.
- la figure 3 est une représentation schématique d'un module de sécurité, selon un exemple de réalisation de l'invention ;
- la figure 4 est une représentation schématique d'une entité réseau, selon un exemple de réalisation de l'invention.

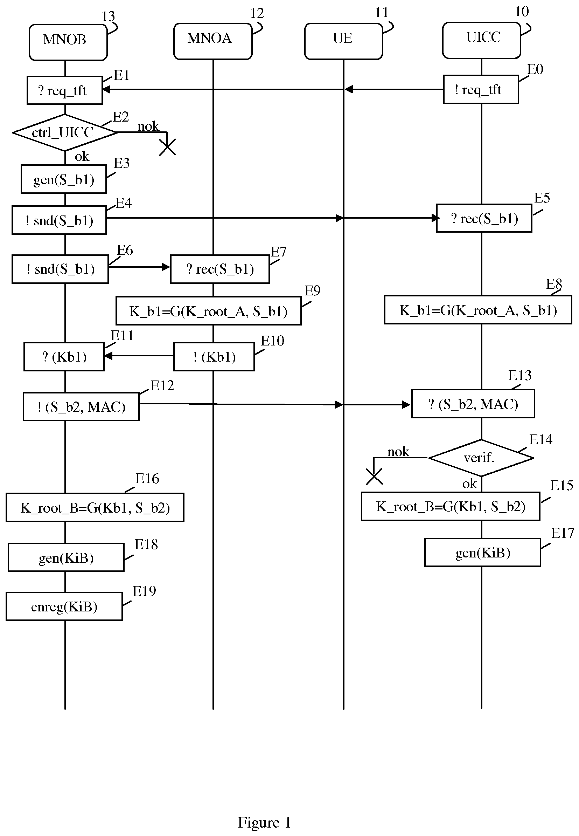

Les étapes d'un procédé de changement de clé d'authentification dans un réseau de télécommunications, selon un premier exemple de réalisation vont maintenant être décrites en relation avec la figure 1.

Un module de sécurité 10 de type UICC (de l'anglais « Universal Integrated Circuit Card »), ou « eUICC » (pour « embedded », ou embarquée) est compris dans un équipement mobile 11. Un exemple d'un tel module est une carte « (U)SIM » (pour « (Universal) Suscriber Identity Module »), insérée dans un équipement et utilisée en téléphonie mobile pour accéder à un réseau mobile. L'équipement mobile 11 est par exemple un terminal mobile ou un équipement « M2M » (de l'anglais « Machine to Machine »). Le module de sécurité 10 mémorise un profil qui comprend une clé secrète d'authentification réseau, propre à un opérateur de réseau et permettant à l'équipement mobile 11 de s'authentifier auprès du réseau lors de l'accès au réseau.

On suppose que dans une configuration initiale, l'équipement mobile 11, plus précisément le module de sécurité 10 de l'équipement 11 mémorise un premier profil A comprenant une première clé d'authentification réseau KiA permettant à l'équipement mobile 11 d'accéder au réseau d'un premier opérateur mobile noté MNOA. Le module de sécurité 10 mémorise par ailleurs une première clé secrète maîtresse notée K_root_A qu'il partage avec le premier opérateur MNOA. Dans un exemple de réalisation, la première clé maîtresse a été installée par le premier opérateur MNOA avant la mise en circulation du module de sécurité 10. La première clé maîtresse K_root_A n'est donc connue que du premier opérateur MNOA et du module de sécurité 10. Le module de sécurité 10 mémorise également un couple de clés publique/privée de chiffrement Kpc/Ksc, destiné à être utilisé dans des opérations de chiffrement. Le module de sécurité 10 mémorise de manière optionnelle un couple de clés publique/privée de signature Kps/Kss, destiné à des opérations de signature.

Dans la configuration initiale, le module de sécurité 10 est donc adapté pour accéder au réseau du premier opérateur MNOA au moyen d'un premier profil actif qui comprend la première clé d'authentification réseau KiA.

Dans une étape initiale E0, un utilisateur, propriétaire de l'équipement mobile 10 souhaite changer d'opérateur de réseau mobile. Il souhaite qu'à l'avenir, l'équipement mobile 11 accède au réseau d'un deuxième opérateur mobile, noté MNOB. A cette fin, une requête de transfert est envoyée par le module de sécurité 10 au deuxième opérateur MNOB à travers le premier réseau A du premier opérateur MNOA. La requête de transfert comprend un certificat de la clé publique de chiffrement Kpc du module de sécurité 10. Le certificat comprend des informations propres au module de sécurité 10, dont la clé publique de chiffrement Kpc et un identifiant du module de sécurité 10, tel qu'un numéro de série, ou « ICCID » (de l'anglais « Integrated Circuit Card Identifier »). De manière classique, les données du certificat sont signées par une Autorité de Certification. Dans un exemple de réalisation, la requête de transfert est signée par le module de sécurité 10 au moyen de la clé secrète de signature Kss mémorisée dans le module de sécurité 10. L'opération de signature est destinée à prouver au deuxième opérateur MNOB que la requête émane bien du module de sécurité 10. En effet, si le module de sécurité 10 est réputé de confiance, il n'en n'est pas de même de l'équipement mobile 11. Par exemple, dans un cas où l'équipement mobile 11 est un terminal intelligent de type smartphone apte à embarquer une grande quantité de logiciels, il est connu que des virus et logiciels espions sont susceptibles d'être installés sur le terminal à l'insu de l'utilisateur légitime, permettant à une personne malintentionnée de prendre le contrôle de l'équipement mobile 11. Une requête pourrait donc être envoyée, de façon frauduleuse par un autre module de sécurité ou par un autre équipement mobile, à la place du module de sécurité 10.

La requête est envoyée par la voie radio et bénéficie de la sécurité inhérente à une transmission sur la voie radio. En variante, elle est envoyée en mode données, à travers le réseau internet.

La requête de transfert est reçue par le deuxième opérateur MNOB au cours d'une étape E1 de réception.

Dans une étape E2 de contrôle, le deuxième opérateur MNOB vérifie que le module de sécurité 10 est associé à un module de sécurité légitime. A cette fin, le deuxième opérateur MNOB vérifie le certificat de la clé publique de chiffrement Kpc du module de sécurité 10 reçu dans la requête de transfert. Par exemple, il vérifie la signature du certificat au moyen d'une clé publique de l'Autorité de Certification. Dans un autre exemple de réalisation, il envoie en outre une demande au premier opérateur MNOA afin de vérifier que l'identifiant du module de sécurité 10 qui figure dans le certificat est bien l'identifiant d'un module de sécurité référencé chez le premier opérateur MNOA. Si la requête est signée au moyen de la clé secrète de signature Kss, alors le deuxième opérateur MNOB vérifie la signature au moyen de la clé publique de signature Kps. Dans un exemple de réalisation, la clé publique de signature Kps est en possession du deuxième opérateur MNOB. Dans un autre exemple de réalisation, la clé publique de signature Kps est accessible par le deuxième opérateur MNOB au moyen d'un annuaire public.

Si le contrôle effectué au cours de l'étape 2 est positif (branche « ok » sur la figure 1), alors dans une étape suivante E3 de génération d'un secret, le deuxième opérateur MNOB génère un premier secret S_b1. Le premier secret S_b1 est une suite de bits, générée par exemple au moyen d'un générateur pseudo-aléatoire. Le premier secret S_b1 est ensuite chiffré par le deuxième opérateur MNOB à l'attention du module de sécurité 10 au moyen de la clé publique de chiffrement Kpc associée au module de sécurité 10. Si le contrôle effectué au cours de l'étape E2 est négatif (branche « nok » sur la figure 1), le procédé s'arrête. En effet, dans ce cas, la requête reçue par le deuxième opérateur MNOB ne provient pas d'un module de sécurité valide.

Dans une première étape E4 d'envoi du secret, le deuxième opérateur MNOB envoie le premier secret S_b1 chiffré au module de sécurité 10, par l'intermédiaire de l'équipement mobile 11. Le premier secret S_b1 chiffré est reçu par le module de sécurité 10 dans une étape E5 de réception.

Dans une deuxième étape E6 d'envoi du secret, le deuxième opérateur MNOB envoie le premier secret S_b1 au premier opérateur MNOA. Le premier secret S_b1 est transmis au premier opérateur MNOA de manière sécurisée selon des méthodes connues. Par exemple, une liaison spécialisée est établie entre le deuxième et le premier opérateur MNOB, MNOA. Dans un autre exemple de réalisation, le premier secret S_b1 est chiffré au moyen d'une clé publique du premier opérateur MNOA. Dans un troisième exemple, le premier secret S_b1 est chiffré par un algorithme symétrique au moyen d'une clé secrète partagée entre le deuxième et le premier opérateur MNOB, MNOA. Le premier secret S_b1 est reçu par le premier opérateur MNOA au cours d'une étape E7 de réception.

Dans une étape E8 de déchiffrement et de génération, le module de sécurité 10 déchiffre le premier secret S_b1 reçu chiffré au moyen de sa clé secrète de déchiffrement Ksc. Le module de sécurité 10 génère alors une clé secrète de génération Kb1 au moyen du premier secret S_b1 et de la première clé maîtresse K_root_A. Un algorithme de diversification de clés « KDF » (de l'anglais « Key Derivation Function ») peut être utilisé. Ainsi, la clé secrète de génération Kb1 peut être obtenue au moyen d'un algorithme de diversification G paramétré par la première clé maîtresse K_root_A et par le premier secret Sb1, selon la formule suivante : Kb1 = G(S_b1, K_root_a). La notion d'algorithme de diversification de clé KDF est connue de l'homme du métier et n'est pas décrite ici.

Dans une étape E9 de génération par le premier opérateur, le premier opérateur MNOA génère la clé secrète de génération Kb1 de la même façon que le module de sécurité 10 au cours de l'étape précédente E8. Le premier opérateur MNOA dispose de la clé maîtresse K_root_A et a reçu le premier secret S_b1 du deuxième opérateur MNOB au cours de l'étape E6 d'envoi du secret. Il génère la clé secrète de génération Kb1 en appliquant le même algorithme de diversification de clé G au premier secret S_b1 et à la clé maîtresse K_root_A.

Dans une étape E10 de transmission au deuxième opérateur, le premier opérateur MNOA transmet au deuxième opérateur MNOB de façon sécurisée la clé secrète de génération Kb1. Par cette transmission, le premier opérateur MNOA donne implicitement une autorisation pour qu'un profil propre au deuxième opérateur MNOB soit installé et activé sur le module de sécurité 10. La transmission peut être sécurisée par toute méthode de sécurisation connue, basée sur de la cryptographie à clé publique, ou de la cryptographie à clé secrète. La clé secrète de génération Kb1 est reçue par le deuxième opérateur MNOB dans une étape E11 de réception.

Dans une étape E12 de génération et d'envoi, le deuxième opérateur MNOB génère un deuxième secret S_b2. Il l'envoie chiffré avec la clé publique de chiffrement Kpc au module de sécurité 10, via l'équipement mobile 1, avec un message d'authentification, ou « MAC » (pour «Message Authentication Code »), généré au moyen de la clé secrète de génération Kb1. Le message d'authentification MAC est destiné à assurer l'intégrité des données transmises, en l'espèce le deuxième secret S_b2 chiffré, et à permettre au module de sécurité 10 de s'assurer que le deuxième opérateur MNOB est autorisé par le premier opérateur MNOA à lui faire générer une clé maîtresse. En effet, le module de sécurité 10 a la connaissance de la clé secrète de génération Kb1 qu'il a reçue du premier opérateur MNOA au cours de l'étape E10 et le message d'authentification MAC nécessite la clé secrète de génération Kb1 transmise du premier au deuxième opérateur MNOA, MNOB. Cette transmission se fait via le réseau du premier opérateur MNOA. Le deuxième secret S_b2 chiffré et le message d'authentification MAC sont reçus par le module de sécurité 10 dans une étape E13 de réception.

Dans une étape E14 de vérification, le module de sécurité 10 vérifie le message d'authentification MAC au moyen de la clé secrète de génération Kb1. Si la vérification du message d'authentification MAC est positive, cela signifie que le deuxième secret S_b2 transmis au cours de l'étape E12 n'a pas été modifié et que le premier opérateur MNOA a envoyé au deuxième opérateur MNOB la clé secrète de génération Kb1. Cela signifie que le premier opérateur MNOA a donné son autorisation pour que le module de sécurité 10 génère une deuxième clé maîtresse propre au deuxième opérateur MNOB.

Dans le cas où la vérification est positive (branche « ok » sur la figure 1), le module de sécurité 10 génère, dans une étape E15 de génération d'une deuxième clé maîtresse, une deuxième clé maîtresse K_root_B au moyen du deuxième secret S_b2 et de la clé secrète de génération Kb1. La deuxième clé maîtresse K_root_B peut être générée au moyen de l'algorithme de diversification de clés G paramétré par le deuxième secret S_b2 et la clé secrète de génération Kb1. Lorsque la vérification mise en oeuvre au cours de l'étape E14 est négative (branche « nok » sur la figure 1), le procédé s'arrête. En effet, dans ce cas, le deuxième secret S_b2 a été altéré durant l'envoi au cours de l'étape E12 ou le premier opérateur MNOA n'a pas donné son autorisation pour que le module de sécurité génère la deuxième clé maîtresse K_root_B propre au deuxième opérateur MNOB.

Dans une étape E16 de génération de la deuxième clé maîtresse, le deuxième opérateur MNOB génère la deuxième clé maîtresse K_root_B de la même façon que le module de sécurité 10 au cours de l'étape précédente.

Dans une étape E17 de génération d'une deuxième clé réseau, le module de sécurité 10 génère une deuxième clé d'authentification réseau KiB au moyen de la deuxième clé maîtresse K_root_B. A cet effet, il applique l'algorithme de diversification de clés G à la deuxième clé maîtresse K_root_B et à un label reçu du deuxième opérateur MNOB, par exemple au cours de l'étape E12. Le label est une donnée de diversification, utilisée par l'algorithme de diversification G pour générer des clés différentes à partir d'une même clé maîtresse secrète. Le label est une donnée reçue du deuxième opérateur MNOB, par exemple au cours de l'étape E12 d'envoi d'un nouveau secret. Le label peut être une donnée incrémentée par le deuxième opérateur MNOB à chaque nouvelle génération de clé réseau, ou une donnée telle qu'une date courante, etc. La deuxième clé d'authentification réseau KiB est destinée à accéder au réseau du deuxième opérateur MNOB.

Dans une étape E18 de génération de la deuxième clé réseau, le deuxième opérateur MNOB génère la deuxième clé d'authentification réseau KiB de la même façon que le module de sécurité 10 au cours de l'étape E17.

A ce stade, le module de sécurité et le deuxième opérateur MNOB partagent la deuxième clé d'authentification réseau KiB.

Dans une étape E19 d'enregistrement, le deuxième opérateur MNOB génère un identifiant unique d'abonné IMSIB dans le réseau du deuxième opérateur MNOB pour le module de sécurité 10. Cet identifiant unique est plus connu sous l'acronyme « IMSI » (de l'anglais «International Mobile Subscriber Identifier»). Le deuxième opérateur MNOB transmet cet identifiant IMSIB au module de sécurité 10 et enregistre la deuxième clé d'authentification réseau KiB dans un centre d'authentification, en association avec l'identifiant IMSIB. Le module de sécurité 10 enregistre l'identifiant unique IMSIB reçu du deuxième opérateur MNOB en association avec la deuxième clé d'authentification réseau KiB.

A ce stade, l'équipement mobile 11 est apte à accéder au réseau mobile du deuxième opérateur MNOB. Soit l'équipement mobile 11 est réinitialisé en étant éteint, puis rallumé, soit une commande de rafraîchissement des données du profil est envoyée par le module de sécurité 10 à l'équipement mobile 11. Cette commande, appelée REFRESH, est destinée à informer l'équipement mobile 11 de changements intervenus au niveau du module de sécurité 10.

Dans un exemple de réalisation, la deuxième clé d'accès au réseau KiB remplace la première clé d'accès au réseau KiA, et la deuxième clé maîtresse K_root_B remplace la première clé maîtresse K_root_A dans une mémoire du module de sécurité 10. Dans un autre exemple de réalisation, la première clé maîtresse K_root_A et la première clé d'accès au réseau KiA sont stockées dans une zone sécurisée du module de sécurité 10. Ainsi, si le responsable de l'équipement mobile 11 souhaite revenir chez le premier opérateur MNOA, tout ou partie de ces clés peuvent être réutilisées.

Dans l'exemple de réalisation décrit ici, l'algorithme de diversification de clés G est appliqué à la deuxième clé maîtresse K_root_B pour générer la deuxième clé d'authentification KiB. Dans un autre exemple de réalisation, la fonction identité Id() est appliquée à la deuxième clé maîtresse K_root_B pour générer la deuxième clé d'authentification. La fonction identité prend en argument une donnée et produit la même donnée en sortie. En d'autres termes Id(K_root_B) = K_root_B. Dans cet exemple, c'est donc la deuxième clé maîtresse K_root_B qui est utilisée comme deuxième clé d'authentification. En d'autres termes, KiB = K_root_B. L'utilisation d'un algorithme de diversification de clés est cependant avantageux lorsqu'il est nécessaire de générer plusieurs clés d'authentification successives. Ainsi, si l'utilisateur de l'équipement mobile 11 change régulièrement d'opérateur et revient chez le deuxième opérateur MNOB, une nouvelle clé d'authentification réseau propre au deuxième opérateur MNOB peut être générée plus facilement, à partir du moment où la seconde clé maîtresse K_root_B est toujours stockée dans le module de sécurité 10. En effet, dans ce cas, le deuxième opérateur MNOB envoie un nouveau label destiné à diversifier la génération de la nouvelle clé d'authentification à partir de la deuxième clé maîtresse K_root_B.

Dans l'exemple décrit ici, le changement de clé d'authentification est mis en oeuvre entre un premier opérateur MNOA et un deuxième opérateur MNOB. Le module de sécurité 10 comprend dans la configuration initiale un profil actif chez le premier opérateur MNOA. Cela signifie:
- que le module de sécurité 10 a été mis en circulation avec la première clé d'authentification KiA. L'équipement mobile 11 est alors apte à accéder au réseau du premier opérateur MNOA et lors de cet accès, le module de sécurité 10 s'authentifie auprès du réseau du premier opérateur MNOA au moyen de la première clé d'authentification, ou que
- la première clé maîtresse K_root_A a été installée en suivant le procédé précédemment décrit à partir d'une ancienne clé maîtresse préalablement installée.

L'invention n'est pas limitée à ce cas de figure. Ainsi, dans un autre exemple de réalisation (non représenté sur la figure 1), le module de sécurité 10 n'a pas encore été mis en circulation. Le procédé de l'invention est adapté pour installer un premier profil actif dans le module de sécurité 10, correspondant à un premier abonnement auprès d'un troisième opérateur MNOC. Dans ce cas, le module de sécurité 10 mémorise une clé maîtresse d'initialisation K_root_init, connue du module de sécurité 10 et d'un encarteur (non représenté). Il mémorise également une clé d'authentification d'initialisation Kiinit, destinée à accéder une première fois à un réseau d'opérateur d'initialisation MNOInit dans un but d'installation initiale uniquement. Le procédé décrit précédemment s'applique. Dans ce cas, une première entité qui correspond à l'encarteur, exécute les étapes du procédé tel que décrit précédemment qui sont mises en oeuvre par le premier opérateur MNOA. Une deuxième entité qui correspond au troisième opérateur MNOC, exécute les étapes du procédé tel que décrit précédemment qui sont mises en oeuvre par le deuxième opérateur MNOB. Dans cet exemple de réalisation, la requête de transfert envoyée par le module de sécurité 10 à la deuxième entité, l'envoi du deuxième secret S_b2 par la deuxième entité au module de sécurité 10, lorsqu'ils sont transmis sur la voie radio, empruntent alors le réseau mobile de l'opérateur d'initialisation MNOInit.

On note que si certains mécanismes de cryptographie à clé publique sont utilisés, par exemple au cours de l'étape initiale E0 pour la transmission de la requête de transfert, et afin de vérifier l'origine de la requête, il n'est pas nécessaire de déployer une infrastructure à clé publique. En effet, le certificat est utilisé afin de contrôler certaines données associées au module de sécurité, tel qu'un identifiant. Il n'est pas nécessaire de gérer des révocations d'identifiants ICCID de modules de sécurité. En effet, un module de sécurité qui serait révoqué ne pourrait pas accéder au réseau du premier opérateur car il ne serait pas authentifié. Le déploiement d'une telle infrastructure à clé publique dans un réseau mobile serait de toute façon impossible à envisager.

On comprend que le procédé décrit précédemment s'applique également dans un cas où la première clé d'authentification KiA a été installée en suivant les étapes du procédé décrit. Ainsi, le procédé s'applique à des mises à jour de clés d'authentification.

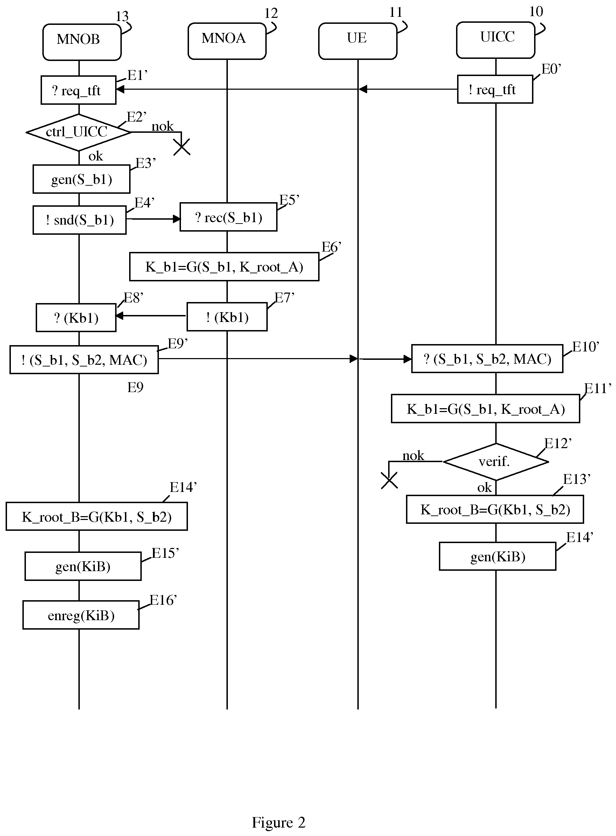

Les étapes d'un procédé de génération de clé d'authentification dans un réseau de télécommunications, selon un deuxième exemple de réalisation vont maintenant être décrites en relation avec la figure 2.

On suppose que dans une configuration initiale, similaire à la configuration initiale décrite en relation avec la figure, l'équipement mobile 11, plus précisément le module de sécurité 10 de l'équipement 11 mémorise un premier profil A comprenant une première clé d'authentification réseau KiA permettant à l'équipement mobile 11 d'accéder au réseau du premier opérateur MNOA. Le module de sécurité 10 mémorise par ailleurs la première clé maîtresse notée K_root_A installée par le premier opérateur MNOA avant la mise en circulation du module de sécurité 10. Le module de sécurité 10 mémorise également un couple de clés publique/privée de chiffrement Kpc/Ksc, et de manière optionnelle un couple de clés publique/privée de signature Kps/Kss, destiné à des opérations de signature.

Dans la configuration initiale, le module de sécurité 10 est donc adapté pour accéder au réseau du premier opérateur MNOA au moyen du premier profil actif qui comprend la première clé d'authentification réseau KiA.

Dans une étape initiale E0', comparable à l'étape initiale E0 décrite précédemment, l'utilisateur, responsable de l'équipement mobile 10 souhaite changer d'opérateur de réseau mobile. Il souhaite qu'à l'avenir l'équipement mobile 11 accède au réseau du deuxième opérateur mobile MNOB. A cette fin, une requête de transfert est envoyée par le module de sécurité 10 au deuxième opérateur MNOB à travers le premier réseau A du premier opérateur MNOA. La requête de transfert comprend le certificat de la clé publique de chiffrement Kpc du module de sécurité 10. Dans un exemple de réalisation, la requête de transfert est signée par le module de sécurité 10 au moyen de la clé secrète de signature Kss mémorisée dans le module de sécurité 10.

La requête peut être envoyée par la voie radio et bénéficie de la sécurité inhérente à une transmission sur la voie radio. En variante, elle est envoyée en mode données, à travers le réseau internet.

La requête de transfert est reçue par le deuxième opérateur MNOB au cours d'une étape E1' de réception.

Dans une étape E2' de contrôle, comparable à l'étape E2 décrite précédemment, le deuxième opérateur MNOB vérifie que le module de sécurité 10 est associé à un module de sécurité légitime. A cette fin, le deuxième opérateur MNOB vérifie le certificat de la clé publique de chiffrement Kpc du module de sécurité 10 reçue dans la requête de transfert. Si la requête est signée au moyen de la clé secrète de signature Kss, alors le deuxième opérateur MNOB vérifie la signature au moyen de la clé publique de signature Kps.

Dans une étape suivante E3' de génération d'un secret, comparable à l'étape E3 décrite précédemment, le deuxième opérateur MNOB génère le premier secret S_b1.

Dans une première étape E4' d'envoi du secret, comparable à l'étape E6 décrite précédemment, le deuxième opérateur MNOB envoie le premier secret S_b1 au premier opérateur MNOA de manière sécurisée, selon une méthode connue. Le premier secret S_b1 est reçu par le module de sécurité 10 dans une étape E5' de réception.

Dans une étape E6' de génération par le premier opérateur, comparable à l'étape E9 décrite précédemment, le premier opérateur MNOA génère la clé secrète de génération Kb1 au moyen du premier secret S_b1 et de la clé maîtresse K_root_A. L'algorithme de diversification de clés G de type KDF peut être utilisé.

Dans une étape E7' de transmission au deuxième opérateur, comparable à l'étape E10 décrite précédemment, le premier opérateur MNOA transmet au deuxième opérateur MNOB de façon sécurisée la première clé secrète de génération Kb1. Par cette transmission, le premier opérateur MNOA donne implicitement une autorisation pour qu'un profil propre au deuxième opérateur MNOB soit installé et activé sur le module de sécurité 10. La clé secrète de génération Kb1 est reçue par le deuxième opérateur MNOB dans une étape E8' de réception.

Dans une étape E9' d'envoi de secrets, le deuxième opérateur MNOB envoie au module de sécurité 10, via l'équipement mobile 11, le premier secret S_b1 et un deuxième secret S_b2, chiffrés avec la clé publique de chiffrement Kpc du module de sécurité 10, ainsi qu'un message d'authentification MAC, généré au moyen de la première clé secrète de génération Kb1. Le message d'authentification MAC est destiné à assurer l'intégrité des données transmises et à authentifier le deuxième opérateur MNOB et à permettre au module de sécurité 10 de s'assurer que le deuxième opérateur MNOB est autorisé par le premier opérateur MNOA à lui faire générer une clé maîtresse.

Cette transmission se fait via le réseau du premier opérateur MNOA. On note que dans cette variante, le premier et le deuxième secrets S_b1, S_b2 sont transmis au module de sécurité 10 dans un même message. Cela constitue une optimisation en termes de temps. Le premier secret S_b1, le deuxième secret S_b2 chiffrés et le message d'authentification MAC sont reçus par le module de sécurité 10 dans une étape E10' de réception.

Dans une étape E11' de génération de la clé secrète de génération Kb1, le module de sécurité 10 génère la clé secrète de génération Kb1 au moyen du premier secret S_b1 et de la première clé maîtresse K_root_A, de la même façon que le premier opérateur MNOA lors de l'étape E6'. Le module de sécurité 10 applique l'algorithme de diversification de clés G à la première clé maîtresse K_root_Aa et à la première clé secrète de génération Kb1.

Dans une étape E12' de vérification, comparable à l'étape E14 décrite précédemment, le module de sécurité 10 vérifie le message d'authentification MAC au moyen de la première clé secrète de génération Kb1. Si la vérification de l'autorisation est positive, cela signifie que le premier et le deuxième secrets S_b1, S_b2 transmis au cours de l'étape E9' n'ont pas été modifiés et que le premier opérateur MNOA a envoyé au deuxième opérateur MNOB la clé secrète de génération Kb1. Cela signifie que le premier opérateur MNOA a donné son autorisation pour que le module de sécurité 10 génère une deuxième clé maîtresse propre au deuxième opérateur MNOB.

Dans le cas où la vérification est positive (branche « ok » sur la figure 1), le module de sécurité 10 génère dans une étape E13' de génération d'une deuxième clé secrète, comparable à l'étape E15 décrite précédemment, une deuxième clé maîtresse K_root_B au moyen du deuxième secret S_b2 et de la clé secrète de génération Kb1. La deuxième clé maîtresse K_root_B peut être générée au moyen de l'algorithme de diversification de clés G paramétré par le deuxième secret S_b2 et la première clé secrète de génération Kb1. Lorsque la vérification mise en oeuvre au cours de l'étape E13' est négative (branche « nok » sur la figure 1), le procédé s'arrête. En effet, dans ce cas, l'envoi des secrets S_b1, S_b2 a été altéré durant l'envoi au cours de l'étape E9' d'envoi des secrets, ou le premier opérateur MNOA n'a pas donné son autorisation pour que le module de sécurité génère la deuxième clé maîtresse K_root_B propre au deuxième opérateur MNOB.

Dans une étape E14' de génération d'une deuxième clé réseau, comparable à l'étape E17 décrite précédemment, le module de sécurité 10 génère une deuxième clé d'authentification réseau KiB au moyen de la deuxième clé maîtresse K_root_B. A cet effet, il applique l'algorithme de diversification de clés G à la deuxième clé maîtresse K_root_B et à un label reçu du deuxième opérateur MNOB, par exemple au cours de l'étape E9'. Le label peut être une donnée incrémentée par le deuxième opérateur MNOB à chaque génération de clé d'authentification, ou une donnée telle que la date courante. Il applique l'algorithme de diversification de clés G à ces deux données.

Dans une étape E15' de génération de la deuxième clé maîtresse, le deuxième opérateur MNOB génère la deuxième clé secrète K_root_B de la même façon que le module de sécurité 10 au cours de l'étape E13'. Il applique l'algorithme de diversification de clés au deuxième secret S_b2 et à la première clé secrète de génération Kb1.

Dans une étape E16' de génération de la deuxième clé réseau, comparable à l'étape E18 décrite précédemment, le deuxième opérateur MNOB génère la deuxième clé d'authentification réseau KiB de la même façon que le module de sécurité 10 au cours de l'étape E14'.

A ce stade, l'équipement mobile 11 est apte à accéder au réseau mobile du deuxième opérateur MNOB. Soit l'équipement mobile 11 est réinitialisé en étant éteint, puis rallumé, soit une commande de rafraîchissement des données du profil est envoyée par le module de sécurité 10 à l'équipement mobile 11. Cette commande, appelée REFRESH, est destinée à informer l'équipement mobile 11 de changements intervenus au niveau du module de sécurité 10.

Bien sûr cet exemple de réalisation s'applique aussi lors de l'installation d'un premier profil associé à un premier abonnement chez un troisième opérateur MNOC. Les entités impliquées étant alors l'encarteur, qui exécute les étapes du procédé mises en oeuvre par une première entité, en l'espèce le premier opérateur MNOA, et un troisième opérateur MNOC qui exécute les étapes du procédé mises en oeuvre par une deuxième entité, en l'espèce le deuxième opérateur MNOB.

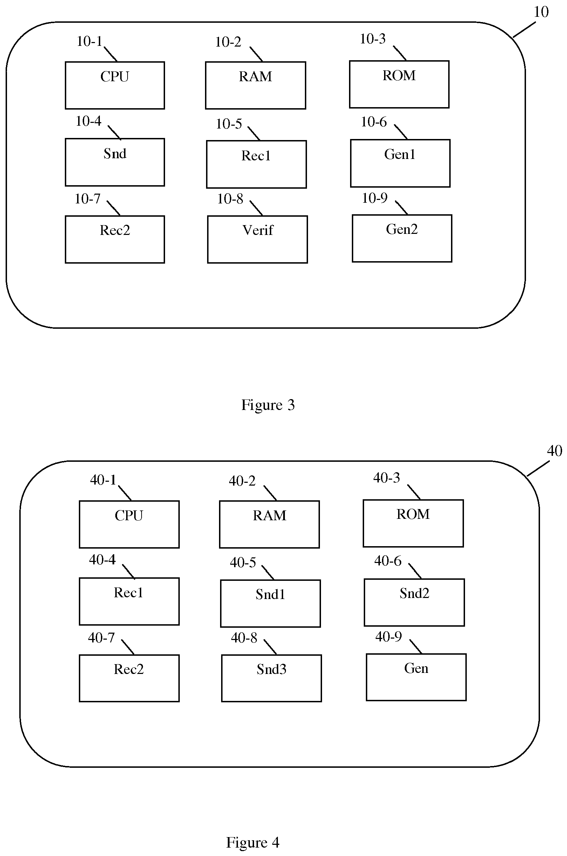

Une représentation schématique d'un module de sécurité 10, selon un exemple de réalisation de l'invention, va maintenant être décrite en relation avec la figure 3.

Dans l'exemple de réalisation décrit ici, le module de sécurité 10 est une carte d'identité d'abonné de type USIM, ou eUSIM destinée à être reçue dans un équipement mobile (non représenté sur la figure 3), par exemple un terminal mobile ou un équipement M2M. Le module de sécurité 10 comprend :
- un processeur 10-1, ou "CPU" (de l'anglais "Central Processing Unit"), destiné à charger des instructions en mémoire, à les exécuter, à effectuer des opérations ;
- un ensemble de mémoires, dont une mémoire volatile 10-2, ou "RAM" (pour "Random Access Memory"), utilisée pour exécuter des instructions de code, stocker des variables, etc., et une mémoire de stockage 10-3 de type « EEPROM » (de l'anglais « Electrically Erasable Programmable Read Only Memory »). La mémoire de stockage 10-3 est agencée pour mémoriser une application comprenant des instructions de code pour mettre en oeuvre les étapes du procédé de génération d'une clé d'authentification décrit précédemment. L'application est par exemple une applet téléchargeable et/ou stockée dans la mémoire 10-3. La mémoire de stockage 10-3 est également agencée pour mémoriser au moins un profil d'abonné. Le premier profil comprend au moins une première clé d'authentification KiA, associée à un premier numéro d'identification d'abonné, la clé d'authentification et le numéro d'identification étant utilisés pour accéder à un réseau d'un premier opérateur MNOA. Le premier profil peut comprendre également des algorithmes, des clés « OTA » (de l'anglais « Over The Air ») et le cas échéant des données propres au réseau du premier opérateur. La mémoire de stockage 10-3 est également agencée pour stocker la première clé maîtresse K_root_A de la première entité du réseau. Dans un exemple de réalisation, la première entité réseau est un opérateur MNOA. Dans ce cas le module de sécurité 10 est déjà en circulation. Dans un autre exemple de réalisation, la première entité est un encarteur. Dans ce cas, il s'agit de mettre en circulation le module de sécurité 10 et d'installer un premier profil pour accéder à un réseau d'opérateur. Lorsque la première entité est un encarteur, la mémoire de stockage 10-3 contient une clé maîtresse d'initialisation K_root_init, et une clé d'authentification d'initialisation Kiinit destinée à accéder une première fois à un réseau d'opérateur d'initialisation MNOInit.

Une partie du profil peut également être compris dans l'équipement mobile qui accueille le module de sécurité 10.

Le module de sécurité 10 comprend également :
- des moyens d'envoi 10-4, agencés pour envoyer à une deuxième entité réseau, par exemple le deuxième opérateur MNOB, une requête de transfert,
- des premiers moyens de réception 10-5, agencés pour recevoir de la deuxième entité un premier secret S_b1,
- des premiers moyens de génération 10-6, agencés pour générer une clé secrète de génération Kb1 à partir de la première clé maîtresse K_root_A et du premier secret S_b1,
- des deuxièmes moyens de réception 10-7, agencés pour recevoir de la deuxième entité un deuxième secret S_b2 et un message d'authentification du deuxième secret calculé au moyen de la clé secrète de génération transmise à la deuxième entité par la première opérateur,
- des moyens de vérification 10-8, agencés pour vérifier le message d'authentification au moyen de la clé de génération,
- des deuxièmes moyens de génération 10-9, agencés pour générer une deuxième clé maîtresse K_root_B à partir du deuxième secret S_b2 et de la clé secrète de génération Kb1, ladite deuxième clé maîtresse étant destinée à être utilisée pour générer la deuxième clé d'authentification pour accéder à un réseau de la deuxième entité.

Les moyens d'envoi 10-4, les premiers moyens de réception 10-5, les premiers moyens de génération 10-6, les deuxièmes moyens de réception 10-7, les moyens de vérification 10-8 et les deuxièmes moyens de génération 10-9 sont de préférence des modules logiciels comprenant des instructions logicielles pour faire exécuter les étapes du procédé de génération d'une clé d'authentification dans un module de sécurité tel que précédemment décrit.

L'invention concerne donc aussi :
- un programme sur un support de données et chargeable dans la mémoire interne du module de sécurité, le programme comprenant des instructions de code pour la mise en oeuvre des étapes du procédé de génération d'une clé d'authentification tel que décrit précédemment, lorsque le programme est exécuté par ledit module ;
- un support de données sur lequel est enregistré le programme selon l'invention.

L'invention porte également sur un équipement mobile qui comprend un module de sécurité tel que décrit précédemment.

Une représentation schématique d'une entité réseau 40, selon un exemple de réalisation de l'invention, va maintenant être décrite en relation avec la figure 4.

L'entité réseau 40 est une entité technique qui met en oeuvre les étapes du procédé décrit précédemment qui sont réalisées par le deuxième opérateur MNOB. C'est un équipement informatique, tel qu'un serveur, adapté pour communiquer avec le premier opérateur MNOA, plus précisément avec une première entité réseau, gérée par le premier opérateur et qui met en oeuvre les étapes du procédé décrit précédemment qui sont réalisées par le premier opérateur MNOA.

L'entité réseau 40, comprend :
- un processeur 40-1, destiné à charger des instructions en mémoire, à les exécuter, à effectuer des opérations ;
- un ensemble de mémoires, dont une mémoire volatile 40-2, ou "RAM" (pour "Random Access Memory"), utilisée pour exécuter des instructions de code, stocker des variables, etc., et une mémoire de stockage 40-3 de type « EEPROM » (de l'anglais « Electrically Erasable Programmable Read Only Memory »). La mémoire de stockage 40-3 est agencée pour mémoriser une application comprenant des instructions de code pour mettre en oeuvre les étapes du procédé de génération d'une clé d'authentification par une entité réseau, décrit précédemment. La mémoire de stockage 40-3 est également agencée pour mémoriser des données associant une clé d'authentification à un identifiant unique d'abonné dans le réseau du deuxième opérateur MNOB. En général, la mémorisation des ces données est déportée dans un serveur d'authentification dédié.

L'entité réseau 40 comprend également :
- des premiers moyens de réception 40-4, agencés pour recevoir du module de sécurité (non représenté) une requête de transfert,
- des premiers moyens d'envoi 40-5, agencés pour envoyer un premier secret S_b1 au module de sécurité,
- des deuxièmes moyens d'envoi 40-6, agencés pour envoyer le premier secret à la première entité réseau,
- des deuxièmes moyens de réception 40-7, agencés pour recevoir en provenance de la première entité une clé secrète de génération Kb1, générée à partir de la première clé maîtresse et du premier secret,
- des troisièmes moyens d'envoi 40-8, agencés pour envoyer au module de sécurité un deuxième secret S_b2 et un message d'authentification du deuxième secret,
- des deuxièmes moyens de génération 40-9, agencés pour générer une deuxième clé maîtresse K_root_B à partir de la clé secrète de génération et du deuxième secret, ladite deuxième clé maîtresse étant destinée à être utilisée pour générer une clé d'authentification pour accéder à un réseau de l'entité.

Les moyens de réception 40-4, les premiers moyens d'envoi 40-5, les deuxièmes moyens d'envoi 40-6, les deuxièmes moyens de réception 40-7, les troisièmes moyens d'envoi 40-8, les deuxièmes moyens de génération 40-9 sont de préférence des modules logiciels comprenant des instructions logicielles pour faire exécuter les étapes du procédé de génération d'une clé d'authentification dans une entité réseau tel que précédemment décrit.

L'invention concerne donc aussi :
- un programme sur un support de données et chargeable dans la mémoire interne de l'entité réseau, le programme comprenant des instructions de code pour la mise en oeuvre des étapes du procédé de génération d'une clé d'authentification tel que décrit précédemment, lorsque le programme est exécuté par ladite entité ;
- un support de données sur lequel est enregistré le programme présenté ci-dessus.

L'invention concerne également sur un système comprenant un équipement mobile équipé d'un module de sécurité 10 tel que décrit précédemment, une entité réseau 40 telle que décrite précédemment et une première entité réseau qui met en oeuvre les étapes du procédé décrit précédemment qui sont exécutées par le premier opérateur MNOA. Cette première entité réseau comprend :
- des moyens pour recevoir le premier secret de l'entité réseau 40 telle que décrite précédemment,
- des moyens de génération, agencés pour générer la clé secrète de génération Kb1 à partir de la première clé maîtresse et du premier secret,
- des moyens d'envoi, agencés pour envoyer la clé secrète de génération à la l'entité réseau 40.

## Revendications

1. Procédé de génération dans un module de sécurité (10) d'une clé d'authentification d'accès à un réseau mobile, le module de sécurité 10 mémorisant une première clé maîtresse (K_root_A) partagée avec une première entité réseau (MNOA) et une première clé d'authentification adaptée pour accéder à un réseau de la première entité réseau, le procédé comprenant les étapes suivantes, mises en oeuvre par le module de sécurité :
- une étape (E0, E0') d'envoi à une deuxième entité réseau (MNOB) d'une requête de transfert,
- une première étape (E5, E10') de réception en provenance de la deuxième entité d'un premier secret (S_b1) chiffré pour le module de sécurité,
- une étape (E8, E11') de génération d'une clé secrète de génération (Kb1) à partir de la première clé maîtresse et du premier secret,
le procédé étant **caractérisé par**
- une étape (E13, E10') de réception en provenance de la deuxième entité d'un deuxième secret (S_b2) chiffré pour le module de sécurité et d'un message d'authentification du deuxième secret calculé par la deuxième entité au moyen de la clé secrète de génération transmise à la deuxième entité par la première entité,
- une étape (E14, E12') de vérification du message d'authentification au moyen de la clé secrète de génération,
- une étape (E15, E13') de génération d'une deuxième clé maîtresse (K_root_B) si la vérification est positive, ladite deuxième clé maîtresse étant générée à partir du deuxième secret (S_b2) et de la clé secrète de génération (Kb1), et utilisée pour générer une deuxième clé d'authentification pour accéder à un réseau de la deuxième entité réseau.

2. Procédé selon la revendication 1, dans lequel la génération de la deuxième clé d'authentification consiste à appliquer un algorithme de diversification de clés à au moins la deuxième clé maîtresse.

3. Procédé selon la revendication 1, dans lequel l'étape de génération de la deuxième clé d'authentification consiste à appliquer la fonction identité à la deuxième clé maîtresse.

4. Procédé selon l'une des revendications précédentes, dans lequel le premier et le deuxième secrets (S_b1, S_b2) sont reçus par le module de sécurité au cours d'une même étape (E10') de réception avec un message d'authentification des deux secrets.

5. Procédé de génération d'une clé d'authentification d'accès à un réseau mobile par une première entité réseau (MNOB), une clé d'authentification générée étant destinée à être partagée avec un module de sécurité (10), ledit module mémorisant une première clé maîtresse (K_root_A) partagée avec une deuxième entité réseau (MNOA) et une première clé d'authentification adaptée pour accéder à un réseau de la première entité réseau, le procédé comprenant les étapes suivantes, mises en oeuvre par ladite première entité réseau :
- une étape (E1, E1') de réception du module de sécurité d'une requête de transfert,
- une étape (E4, E9') d'envoi au module de sécurité d'un premier secret (S_b1) chiffré pour le module de sécurité,
- une étape (E6, E4') d'envoi du premier secret à la deuxième entité,
- une étape (E11, E8') de réception en provenance de la deuxième entité d'une clé secrète de génération (Kb1) générée à partir de la première clé maîtresse et du premier secret,
le procédé étant **caractérisé par**
- une étape (E12, E9') d'envoi au module de sécurité d'un deuxième secret (S_b2) chiffré pour le module de sécurité et d'un message d'authentification du deuxième secret calculé au moyen de de la clé secrète de génération reçue de la deuxième entité,
- une étape (E16, E14') de génération d'une deuxième clé maîtresse à partir de la clé secrète de génération et du deuxième secret, ladite deuxième clé maîtresse étant utilisée pour générer une deuxième clé d'authentification pour accéder à un réseau de la première entité réseau.

6. Programme d'ordinateur destiné à être installé dans une mémoire d'un module de sécurité, comprenant des instructions pour la mise en oeuvre des étapes du procédé de génération d'une clé d'authentification dans un module de sécurité selon l'une des revendications 1 à 4, lorsque le programme est exécuté par un processeur.

7. Support de données sur lequel est enregistré le programme selon la revendication 6.

8. Module de sécurité (10) adapté pour générer une clé d'authentification d'accès à un réseau mobile, le module de sécurité comprenant des moyens pour mémoriser une première clé maîtresse (K_root_A) partagée avec une première entité réseau (MNOA) et une première clé d'authentification adaptée pour accéder à un réseau de la première entité réseau, le module de sécurité comprenant en outre :
- des moyens d'envoi (10-4), agencés pour envoyer à une deuxième entité réseau (MNOB) une requête de transfert,
- des premiers moyens de réception (10-5), agencés pour recevoir un premier secret (S_b1) chiffré en provenance de la deuxième entité,
- des premiers moyens de génération (10-6), agencés pour générer une clé secrète de génération (Kb1) à partir de la première clé maîtresse et du premier secret,
- des deuxièmes moyens de réception (10-7), agencés pour recevoir en provenance de la deuxième entité un deuxième secret (S_b2) chiffré et un message d'authentification du deuxième secret calculé par la deuxième entité au moyen de la clé secrète de génération transmise à la deuxième entité par la première entité,
- des moyens de vérification (10-8), agencés pour vérifier le message d'authentification au moyen de la clé secrète de génération,
- des deuxièmes moyens de génération (10-9), agencés pour générer une deuxième clé maîtresse (K_root_B) à partir du deuxième secret (S_b2) et de la clé secrète de génération (Kb1), ladite deuxième clé maîtresse étant destinée à être utilisée pour générer une deuxième clé d'authentification pour accéder à un réseau de la deuxième entité.

9. Equipement mobile (11) comprenant un module de sécurité selon la revendication 8.

10. Entité réseau (40, MNOB), adaptée pour générer une clé d'authentification d'accès à un réseau mobile destinée à être partagée avec un module de sécurité (10), ledit module de sécurité mémorisant une première clé maîtresse (K_root_A) partagée avec une première entité du réseau (MNOA) et une première clé d'authentification adaptée pour accéder à un réseau de la première entité réseau, l'entité réseau comprenant :
- des premiers moyens de réception (40-4), agencés pour recevoir du module de sécurité une requête de transfert,
- des premiers moyens d'envoi (40-5), agencés pour envoyer un premier secret (S_b1) chiffré au module de sécurité,
- des deuxièmes moyens d'envoi (40-6), agencés pour envoyer le premier secret à la première entité,
- des deuxièmes moyens de réception (40-7), agencés pour recevoir en provenance de la première entité une clé secrète de génération (Kb1) générée à partir de la première clé maîtresse et du premier secret,
- des troisièmes moyens d'envoi (40-8), agencés pour envoyer au module de sécurité un deuxième secret (S_b2) chiffré et un message d'authentification du deuxième secret,
- des moyens de génération (40-9), agencés pour générer une deuxième clé maîtresse (K_root_B) à partir de la clé secrète de génération et du deuxième secret, ladite deuxième clé maîtresse étant destinée à être utilisée pour générer une deuxième clé d'authentification pour accéder à un réseau de la deuxième entité.

11. Système de génération d'une clé d'authentification comprenant :
- un module de sécurité selon la revendication 8,
- une première entité réseau (MNOA) comprenant :
- des moyens pour recevoir le premier secret d'une deuxième entité réseau selon la revendication 10,
- des moyens de génération, agencés pour générer la clé secrète de génération (Kb1) à partir de la première clé maîtresse et du premier secret,
- des moyens d'envoi, agencés pour envoyer la clé secrète de génération à la deuxième entité,
- la deuxième entité selon la revendication 10.

12. Programme d'ordinateur destiné à être installé dans une mémoire d'une entité réseau, comprenant des instructions pour la mise en oeuvre des étapes du procédé de génération d'une clé d'authentification par une entité réseau selon la revendication 5, lorsque le programme est exécuté par un processeur.

13. Support de données sur lequel est enregistré le programme selon la revendication 12.

## Patentansprüche

1. Verfahren zur Erzeugung, in einem Sicherheitsmodul (10), eines Authentifizierungsschlüssels für den Zugang zu einem Mobilfunknetz, wobei das Sicherheitsmodul (10) einen ersten Masterschlüssel (K_root_A), der mit einer ersten Netzentität (MNOA) gemeinsam genutzt wird, und einen ersten Authentifizierungsschlüssel, der dafür ausgelegt ist, auf ein Netz der ersten Netzentität zuzugreifen, speichert, wobei das Verfahren die folgenden Schritte umfasst, die von dem Sicherheitsmodul ausgeführt werden:
- einen Schritt (E0, E0') des Sendens einer Übertragungsanforderung an eine zweite Netzentität (MNOB),
- einen ersten Schritt (E5, E10') des Empfangens, von der zweiten Entität, eines für das Sicherheitsmodul verschlüsselten ersten Geheimnisses (S_b1),
- einen Schritt (E8, E11') des Erzeugens eines geheimen Erzeugungsschlüssels (Kb1) aus dem ersten Masterschlüssel und dem ersten Geheimnis,
wobei das Verfahren **gekennzeichnet ist durch**
- einen Schritt (E13, E10') des Empfangens, von der zweiten Entität, eines für das Sicherheitsmodul verschlüsselten zweiten Geheimnisses (S_b2) und einer Authentifizierungsnachricht des zweiten Geheimnisses, das von der zweiten Entität mittels des geheimen Erzeugungsschlüssels berechnet wurde, der durch die erste Entität zur zweiten Entität übertragen wurde,
- einen Schritt (E14, E12') der Überprüfung der Authentifizierungsnachricht mittels des geheimen Erzeugungsschlüssels,
- einen Schritt (E15, E13') des Erzeugens eines zweiten Masterschlüssels (K_root_B), falls die Überprüfung positiv ist, wobei der zweite Masterschlüssel aus dem zweiten Geheimnis (S_b2) und dem geheimen Erzeugungsschlüssel (Kb1) erzeugt wird und verwendet wird, um einen zweiten Authentifizierungsschlüssel zu erzeugen, um auf ein Netz der zweiten Netzentität zuzugreifen.

2. Verfahren nach Anspruch 1, wobei das Erzeugen des zweiten Authentifizierungsschlüssels darin besteht, einen Algorithmus zur Schlüsseldiversifizierung auf wenigstens den zweiten Masterschlüssel anzuwenden.

3. Verfahren nach Anspruch 1, wobei der Schritt des Erzeugens des zweiten Authentifizierungsschlüssels darin besteht, die Identitätsfunktion auf den zweiten Masterschlüssel anzuwenden.

4. Verfahren nach einem der vorhergehenden Ansprüche, wobei das erste und das zweite Geheimnis (S_b1, S_b2) durch das Sicherheitsmodul in ein und demselben Schritt (E10') des Empfangens mit einer Authentifizierungsnachricht der zwei Geheimnisse empfangen werden.

5. Verfahren zur Erzeugung eines Authentifizierungsschlüssels für den Zugang zu einem Mobilfunknetz durch eine erste Netzentität (MNOB), wobei ein erzeugter Authentifizierungsschlüssel dazu bestimmt ist, mit einem Sicherheitsmodul (10) gemeinsam genutzt zu werden, wobei dieses Modul einen ersten Masterschlüssel (K_root_A), der mit einer zweiten Netzentität (MNOA) gemeinsam genutzt wird, und einen ersten Authentifizierungsschlüssel, der dafür ausgelegt ist, auf ein Netz der ersten Netzentität zuzugreifen, speichert, wobei das Verfahren die folgenden Schritte umfasst, die von der ersten Netzentität ausgeführt werden:
- einen Schritt (E1, E1') des Empfangens einer Übertragungsanforderung von dem Sicherheitsmodul,
- einen Schritt (E4, E9') des Sendens eines für das Sicherheitsmodul verschlüsselten ersten Geheimnisses (S_b1) an das Sicherheitsmodul,
- einen Schritt (E6, E4') des Sendens des ersten Geheimnisses an die zweite Entität,
- einen Schritt (E11, E8') des Empfangens eines geheimen Erzeugungsschlüssels (Kb1), der aus dem ersten Masterschlüssel und dem ersten Geheimnis erzeugt wurde, von der zweiten Entität,
wobei das Verfahren **gekennzeichnet ist durch**
- einen Schritt (E12, E9') des Sendens, an das Sicherheitsmodul, eines für das Sicherheitsmodul verschlüsselten zweiten Geheimnisses (S_b2) und einer Authentifizierungsnachricht des zweiten Geheimnisses, das mittels des von der zweiten Entität empfangenen geheimen Erzeugungsschlüssels berechnet wurde,
- einen Schritt (E16, E14') des Erzeugens eines zweiten Masterschlüssels aus dem geheimen Erzeugungsschlüssel und dem zweiten Geheimnis, wobei der zweite Masterschlüssel verwendet wird, um einen zweiten Authentifizierungsschlüssel zu erzeugen, um auf ein Netz der ersten Netzentität zuzugreifen.

6. Computerprogramm, welches dazu bestimmt ist, in einem Speicher eines Sicherheitsmoduls installiert zu werden, und Anweisungen zur Durchführung der Schritte des Verfahrens zur Erzeugung eines Authentifizierungsschlüssels in einem Sicherheitsmodul nach einem der Ansprüche 1 bis 4, wenn das Programm von einem Prozessor ausgeführt wird, umfasst.

7. Datenträger, auf welchem das Programm nach Anspruch 6 aufgezeichnet ist.

8. Sicherheitsmodul (10), welches dafür ausgelegt ist, einen Authentifizierungsschlüssel für den Zugang zu einem Mobilfunknetz zu erzeugen, wobei das Sicherheitsmodul Mittel zum Speichern eines ersten Masterschlüssels (K_root_A), der mit einer ersten Netzentität (MNOA) gemeinsam genutzt wird, und eines ersten Authentifizierungsschlüssels, der dafür ausgelegt ist, auf ein Netz der ersten Netzentität zuzugreifen, umfasst, wobei das Sicherheitsmodul außerdem umfasst:
- Sendemittel (10-4), die dafür eingerichtet sind, eine Übertragungsanforderung an eine zweite Netzentität (MNOB) zu senden,
- erste Empfangsmittel (10-5), die dafür eingerichtet sind, von der zweiten Entität ein verschlüsseltes erstes Geheimnis (S_b1) zu empfangen,
- erste Erzeugungsmittel (10-6), die dafür eingerichtet sind, aus dem ersten Masterschlüssel und dem ersten Geheimnis einen geheimen Erzeugungsschlüssel (Kb1) zu erzeugen,
- zweite Empfangsmittel (10-7), die dafür eingerichtet sind, von der zweiten Entität ein verschlüsseltes zweites Geheimnis (S_b2) und eine Authentifizierungsnachricht des zweiten Geheimnisses, das von der zweiten Entität mittels des geheimen Erzeugungsschlüssels berechnet wurde, der durch die erste Entität zur zweiten Entität übertragen wurde, zu empfangen,
- Überprüfungsmittel (10-8), die dafür eingerichtet sind, die Authentifizierungsnachricht mittels des geheimen Erzeugungsschlüssels zu überprüfen,
- zweite Erzeugungsmittel (10-9), die dafür eingerichtet sind, aus dem zweiten Geheimnis (S_b2) und dem geheimen Erzeugungsschlüssel (Kb1) einen zweiten Masterschlüssel (K_root_B) zu erzeugen, wobei der zweite Masterschlüssel dazu bestimmt ist, verwendet zu werden, um einen zweiten Authentifizierungsschlüssel zu erzeugen, um auf ein Netz der zweiten Entität zuzugreifen.

9. Mobilgerät (11), welches ein Sicherheitsmodul nach Anspruch 8 umfasst.

10. Netzentität (40, MNOB), welche dafür ausgelegt ist, einen Authentifizierungsschlüssel für den Zugang zu einem Mobilfunknetz zu erzeugen, der dazu bestimmt ist, mit einem Sicherheitsmodul (10) gemeinsam genutzt zu werden, wobei dieses Sicherheitsmodul einen ersten Masterschlüssel (K_root_A), der mit einer ersten Netzentität (MNOA) gemeinsam genutzt wird, und einen ersten Authentifizierungsschlüssel, der dafür ausgelegt ist, auf ein Netz der ersten Netzentität zuzugreifen, speichert, wobei die Netzentität umfasst:
- erste Empfangsmittel (40-4), die dafür eingerichtet sind, von dem Sicherheitsmodul eine Übertragungsanforderung zu empfangen,
- erste Sendemittel (40-5), die dafür eingerichtet sind, ein verschlüsseltes erstes Geheimnis (S_b1) an das Sicherheitsmodul zu senden,
- zweite Sendemittel (40-6), die dafür eingerichtet sind, das erste Geheimnis an die erste Entität zu senden,
- zweite Empfangsmittel (40-7), die dafür eingerichtet sind, von der ersten Entität einen geheimen Erzeugungsschlüssel (Kb1) zu empfangen, der aus dem ersten Masterschlüssel und dem ersten Geheimnis erzeugt wurde,
- dritte Sendemittel (40-8), die dafür eingerichtet sind, ein verschlüsseltes zweites Geheimnis (S_b2) und eine Authentifizierungsnachricht des zweiten Geheimnisses an das Sicherheitsmodul zu senden,
- Erzeugungsmittel (40-9), die dafür eingerichtet sind, aus dem geheimen Erzeugungsschlüssel und dem zweiten Geheimnis einen zweiten Masterschlüssel (K_root_B) zu erzeugen, wobei der zweite Masterschlüssel dazu bestimmt ist, verwendet zu werden, um einen zweiten Authentifizierungsschlüssel zu erzeugen, um auf ein Netz der zweiten Entität zuzugreifen.

11. System zur Erzeugung eines Authentifizierungsschlüssels, welches umfasst:
- ein Sicherheitsmodul nach Anspruch 8,
- eine erste Netzentität (MNOA), welche umfasst:
- Mittel zum Empfangen des ersten Geheimnisses von einer zweiten Netzentität nach Anspruch 10,
- Erzeugungsmittel, die dafür eingerichtet sind, aus dem ersten Masterschlüssel und dem ersten Geheimnis den geheimen Erzeugungsschlüssel (Kb1) zu erzeugen,
- Sendemittel, die dafür eingerichtet sind, den geheimen Erzeugungsschlüssel an die zweite Entität zu senden,
- die zweite Entität nach Anspruch 10.

12. Computerprogramm, welches dazu bestimmt ist, in einem Speicher einer Netzentität installiert zu werden, und Anweisungen zur Durchführung der Schritte des Verfahrens zur Erzeugung eines Authentifizierungsschlüssels durch eine Netzentität nach Anspruch 5, wenn das Programm von einem Prozessor ausgeführt wird, umfasst.

13. Datenträger, auf welchem das Programm nach Anspruch 12 aufgezeichnet ist.

## Claims

1. Method for generating, in a security module (10), an authentication key for access to a mobile network, the security module (10) storing a first root key (K_root_A) shared with a first network entity (MNOA) and a first authentication key suitable for accessing a network of the first network entity, the method including the following steps, implemented by the security module:
- a step (E0, E0') of sending a transfer request to a second network entity (MNOB),
- a first step (E5, E10') of receiving a first secret (S_b1) encrypted for the security module from the second entity,
- a step (E8, E11') of generating a secret generation key (Kb1) from the first root key and from the first secret,
the method being **characterized by**:
- a step (E13, E10') of receiving from the second entity a second secret (S_b2) encrypted for the security module and a message authenticating the second secret calculated by the second entity by means of the secret generation key transmitted to the second entity by the first entity,
- a step (E14, E12') of verifying the authentication message by means of the secret generation key,
- a step (E15, E13') of generating a second root key (K_root_B) if the verification is positive, said second root key being generated from the second secret (S_b2) and from the secret generation key (Kb1), and used to generate a second authentication key to access a network of the second network entity.

2. Method according to Claim 1, in which the generation of the second authentication key consists in applying a key diversification algorithm to at least the second root key.

3. Method according to Claim 1, in which the step of generating the second authentication key consists in applying the identity function to the second root key.

4. Method according to one of the preceding claims, in which the first and the second secrets (S_b1, S_b2) are received by the security module during the same reception step (E10') with a message authenticating the two secrets.

5. Method for the generation of an authentication key for access to a mobile network by a first network entity (MNOB), a generated authentication key being intended to be shared with a security module (10), said module storing a first root key (K_root_A) shared with a second network entity (MNOA) and a first authentication key suitable for accessing a network of the first network entity, the method including the following steps, implemented by said first network entity:
- a step (E1, E1') of receiving a transfer request from the security module,
- a step (E4, E9') of sending to the security module a first secret (S_b1) encrypted for the security module,
- a step (E6, E4') of sending the first secret to the second entity,
- a step (E11, E8') of receiving from the second entity a secret generation key (Kb1) generated from the first root key and from the first secret,
the method being **characterized by**:
- a step (E12, E9') of sending to the security module a second secret (S_b2) encrypted for the security module and a message authenticating the second secret calculated by means of the secret generation key received from the second entity,
- a step (E16, E14') of generating a second root key from the secret generation key and from the second secret, said second root key being used to generate a second authentication key to access a network of the first network entity.

6. Computer program intended to be installed in a memory of a security module, including instructions for implementing the steps of the method for generating an authentication key in a security module according to one of Claims 1 to 4 when the program is executed by a processor.

7. Data medium on which the program according to Claim 6 is recorded.

8. Security module (10) suitable for generating an authentication key for access to a mobile network, the security module including means to store a first root key (K_root_A) shared with a first network entity (MNOA) and a first authentication key suitable for accessing a network of the first network entity, the security module furthermore including:
- sending means (10-4), configured to send a transfer request to a second network entity (MNOB),
- first reception means (10-5), configured to receive a first encrypted secret (S_b1) from the second entity,
- first generation means (10-6), configured to generate a secret generation key (Kb1) from the first root key and from the first secret,
- second reception means (10-7), configured to receive from the second entity a second encrypted secret (S_b2) and a message authenticating the second secret calculated by the second entity by means of the secret generation key transmitted to the second entity by the first entity,
- verification means (10-8), configured to verify the authentication message by means of the secret generation key,
- second generation means (10-9), configured to generate a second root key (K_root_B) from the second secret (S_b2) and from the secret generation key (Kb1), said second root key being intended to be used to generate a second authentication key to access a network of the second entity.

9. Mobile device (11) including a security module according to Claim 8.

10. Network entity (40, MNOB) suitable for generating an authentication key for access to a mobile network intended to be shared with a security module (10), said security module storing a first root key (K_root_A) shared with a first network entity (MNOA) and a first authentication key suitable for accessing a network of the first network entity, the network entity including:
- first reception means (40-4), configured to receive a transfer request from the security module,
- first sending means (40-5), configured to send a first encrypted secret (S_b1) to the security module,
- second sending means (40-6), configured to send the first secret to the first entity,
- second reception means (40-7), configured to receive from the first entity a secret generation key (Kb1), generated from the first root key and from the first secret,
- third sending means (40-8), configured to send to the security module a second encrypted secret (S_b2) and a message authenticating the second secret,
- generation means (40-9), configured to generate a second root key (K_root_B) from the secret generation key and from the second secret, said second root key being intended to be used to generate a second authentication key to access a network of the second entity.

11. System for generating an authentication key, including:
- a security module according to Claim 8,
- a first network entity (MNOA), including:
- means for receiving the first secret from a second network entity according to Claim 10,
- generation means, configured to generate the secret generation key (Kb1) from the first root key and from the first secret,
- sending means, configured to send the secret generation key to the second entity,
- the second entity according to Claim 10.

12. Computer program intended to be installed in a memory of a network entity, including instructions for implementing the steps of the method for the generation of an authentication key by a network entity according to Claim 5 when the program is executed by a processor.

13. Data medium on which the program according to Claim 12 is recorded.
